# EUROPÄISCHE PATENTSCHRIFT

(11) **EP 2 324 601 B1**
(45) Veröffentlichungstag und Bekanntmachung des Hinweises auf die Patenterteilung: **13.03.2013**
(21) Anmeldenummer: 09782099.7
(22) Anmeldetag: 24.08.2009
(51) Int. Cl.: H04L 12/70

(54) **VERFAHREN ZUM ÜBERTRAGEN VON DATENPAKETEN IN EINEM KOMMUNIKATIONSNETZ UND SCHALTVORRICHTUNG**
METHOD FOR TRANSFERRING DATA PACKETS IN A COMMUNICATION NETWORK AND SWITCHING DEVICE
PROCÉDÉ DE TRANSMISSION DE PAQUETS DE DONNÉES DANS UN RÉSEAU DE COMMUNICATION ET DISPOSITIF DE COMMUTATION

(30) Priorität: 25.08.2008 DE 102008039580
(43) Veröffentlichungstag der Anmeldung: 25.05.2011
(73) Patentinhaber: Siemens Aktiengesellschaft, 80333 München (DE)
(72) Erfinder: SCHEFFEL, Matthias, 82008 Unterhaching (DE); KULKARNI, Vivek, 82008 Unterhaching (DE)
(86) Internationale Anmeldenummer: PCT/EP2009/060852
(87) Internationale Veröffentlichungsnummer: WO 2010/026067

(56) Entgegenhaltungen:
- EP-A2- 0 582 537
- US-A1- 2003 039 254
- US-A1- 2008 071 924
- US-B1- 6 842 423

## Beschreibung

Die Erfindung betrifft ein Verfahren zum Übertragen von Datenpaketen in einem Kommunikationsnetz, wobei erste Datenpakete mit einer niedrigen Priorität zwischen einem Sender und einem Empfänger des Kommunikationsnetzes übertragen werden und wobei zweite Datenpakete mit einer hohen Priorität gegenüber den ersten Datenpaketen bevorzugt zwischen dem Sender und dem Empfänger übertragen werden. Bei dem Verfahren wird bei einem von dem Sender an den Empfänger zu übertragenden zweiten Datenpaket überprüft, ob gegenwärtig ein erstes Datenpaket übertragen wird. Wenn die Überprüfung, ob gegenwärtig ein erstes Datenpaket übertragen wird, positiv ist, wird die Übertragung des ersten Datenpakets abgebrochen oder unterbrochen und das zweite Datenpaket im Anschluss daran übertragen. Nach der Übertragung des zweiten Datenpakets wird die Übertragung des nicht übertragenen ersten Datenpakets wiederholt oder der Rest des unvollständig übertragenen Datenpakets veranlasst.

Die Erfindung betrifft ferner eine Schaltvorrichtung für ein Kommunikationsnetz, die einen oder mehrere Dateneingänge, an welche ein jeweiliger Sender anschließbar ist, eine oder mehrere Datenausgänge, an welche ein jeweiliger Empfänger anschließbar ist, und eine Auswerteeinheit umfasst, welche mit dem oder den Dateneingängen verbunden und über eine jeweilige Sendevorrichtung mit dem oder den Datenausgängen gekoppelt ist. Die Auswerteeinheit ist dazu ausgebildet, an dem oder den Dateneingängen anliegende Datenpakete zu empfangen und auszuwerten, an welchen der Datenausgänge ein jeweiliges Datenpaket zu lenken ist und die Datenpakete an die entsprechend zugeordnete Sendevorrichtung zu übertragen. Die jeweilige Sendevorrichtung ist dazu ausgebildet, zu überprüfen, ob gegenwärtig ein erstes Datenpaket mit einer niedrigen Priorität an den an die Sendevorrichtung angeschlossenen Empfänger übertragen wird, und, wenn die Überprüfung, ob gegenwärtig ein erstes Datenpaket übertragen wird, positiv ist, die Übertragung des ersten Datenpakets abzubrechen oder zu unterbrechen und ein zweites Datenpaket mit einer gegenüber den ersten Datenpaketen höheren Priorität im Anschluss daran zu übertragen und nach der Übertragung des zweiten Datenpakets die Übertragung des nicht übertragenen ersten Datenpakets zu wiederholen oder den Rest des unvollständig übertragenen ersten Datenpakets zu veranlassen.

Bei der Übertragung von Datenpaketen in einem Kommunikationsnetz müssen diese von einem sendenden Netzknoten (Sender) über einen oder mehrere Netzknoten (sog. Intermediate Nodes) zu einem empfangenden Netzknoten (Empfänger) weitergeleitet werden. Zu diesem Zweck weist jedes Datenpaket einen sog. Header mit Kontroll- und Routing-Informationen auf. Daneben umfasst ein Datenpaket ein Feld für die Nutzlast, in dem die eigentlichen Daten enthalten sind. Das Weiterleiten oder Übertragen von Datenpaketen an einen Netzknoten des Kommunikationsnetzes wird auch als "Packet Switching" bezeichnet. Beim Empfang eines Datenpakets wird der Header des Datenpakets ausgewertet, um ermitteln zu können, an welchen weiteren Netzknoten des Kommunikationsnetzes das Datenpaket übertragen werden muss. Hierzu ist es notwendig, dass jeder der Netzknoten des Kommunikationsnetzes die Topologie des Kommunikationsnetzes kennt, um den nächsten Netzknoten, in der Regel basierend auf einer Routing-Tabelle, bestimmen zu können. Diese Vorgehensweise trifft insbesondere auf solche Kommunikationsnetze zu, welche als Ethernet-Kommunikationsnetze ausgebildet sind. Prinzipiell ist dieses Vorgehen jedoch auch in anderen Kommunikationsnetzen gültig.

Grundsätzlich besteht bei der Übertragung von Datenpaketen das Problem, dass an einer Schalteinrichtung, einem besonderen Netzknoten oder einem das Datenpaket weiterleitenden Netzknoten des Kommunikationsnetzes, eintreffende Datenpakete nur verzögert weitergeleitet werden können. Der Grund hierfür besteht darin, dass eine parallele Verarbeitung einer Vielzahl von Datenpaketen an einer Schalteinrichtung in der Regel nicht möglich ist. Die Verzögerung wird dabei insbesondere durch das Auslesen und Auswerten der in dem Header enthaltenen Daten verursacht.

Hierbei kann es zu der Situation kommen, dass unmittelbar nach dem Start eines Datenpakets niederer Priorität ein Datenpaket hoher Priorität, z.B. von einem anderen Netzknoten, an der Schalteinrichtung eintrifft, das an den gleichen Netzknoten wie das Datenpaket niederer Priorität zu senden ist. Ohne besondere Behandlung muss das Datenpaket hoher Priorität warten, bis die Übertragung des Datenpakets niederer Priorität vollständig beendet ist. Hierdurch wird sog. Paket-Jitter verursacht. Es gibt Applikationen, welche bezüglich Jitter kritisch sind, z.B. eine Zeitsynchronisation zwischen mehreren Netzknoten des Kommunikationsnetzes gemäß IEEE 1588, wobei eine Genauigkeit im Bereich einer Mikrosekunde erforderlich ist.

Zur Vermeidung einer derartigen Situation ist aus der US 2005/0175013 A1 ein gattungsgemäßes Verfahren zum Übertragen von Datenpaketen in einem Kommunikationsnetz bekannt. Bei diesem Verfahren wird vorgeschlagen, Datenpakete unterschiedlicher Priorität in unterschiedliche Ausgangs-Puffer einzuspeichern, um die Übertragung in Abhängigkeit der Priorität von diesen Ausgangs-Puffern zu bewerkstelligen. In einem Szenario ist dabei vorgesehen, die Übertragung eines Datenpakets niedriger Priorität abzubrechen, sobald ein Datenpaket hoher Priorität in dem entsprechenden Ausgangs-Puffer vorliegt. Erst nachdem das Datenpaket hoher Priorität vollständig an den Empfänger übertragen wurde, erfolgt eine Wiederaufnahme der Übertragung des Datenpakets mit niedrigerer Priorität. Dieses Vorgehen wird als "pre-emption with retransmission service policy" bezeichnet.

Um die Behandlung Datenpakete hoher Priorität in einer Schalteinrichtung zu vereinfachen, schlägt die US 2005/0175013 A1 vor, im Header des Datenpaketes ein Indikator-Bit zu setzen, so dass Datenpakete mit einer derartigen Kennzeichnung vorrangig gegenüber anderen Datenpaketen behandelt werden. Dabei zielt das in der US 2005/0175013 A1 beschriebene Verfahren insbesondere auf die Übertragung von Sprachnachrichten in einem gemäß dem Internet-Protokoll arbeitenden Kommunikationsnetz ab.

Aus der US 2003/0039254 A1, der US 2008/0071924 A1 sowie der EP 0 582 537 A2 sind jeweils Verfahren zum Übertragen von Datenpaketen in einem Kommunikationsnetz bekannt, bei denen erste Datenpakete mit einer niedrigen Priorität zwischen einem Sender und einem Empfänger des Kommunikationsnetzes übertragen werden. Dabei werden zweite Datenpakete mit einer gegenüber den ersten Datenpaketen höheren Priorität gegenüber den ersten Datenpaketen bevorzugt zwischen dem Sender und dem Empfänger übertragen. Bei einem von dem Sender an den Empfänger zu übertragenden zweiten Datenpaket wird hierbei überprüft, ob gegenwärtig ein erstes Datenpaket übertragen wird. Wenn diese Überprüfung positiv ist, wird die Übertragung des ersten Datenpakets unterbrochen und das zweite Datenpaket im Anschluss darin übertragen. Nach der Übertragung des zweiten Datenpakets wird die Übertragung des Rests des unvollständig übertragenen ersten Datenpakets veranlasst.

Es ist Aufgabe der vorliegenden Erfindung, ein Verfahren zum Übertragen von Datenpaketen in einem Kommunikationsnetz anzugeben, bei dem die Behandlung von Datenpaketen niederer Priorität im Falle eines Übertragungsabbruchs aufgrund eines zu übertragenden Datenpakets hoher Priorität verbessert wird.

Es ist weiter Aufgabe der vorliegenden Erfindung, eine Schaltvorrichtung anzugeben, welche eine vereinfachte Behandlung von Datenpaketen niederer Priorität ermöglicht, wenn deren Übertragung im Falle eines zu übertragenden Datenpakets hoher Priorität unterbrochen wurde.

Diese Aufgabe wird durch ein Verfahren mit den Merkmalen des Patentanspruches 1 sowie eine Schaltvorrichtung mit den Merkmalen des Patentanspruches 12 gelöst. Vorteilhafte Ausgestaltungen ergeben sich jeweils aus den abhängigen Patentansprüchen.

Die Erfindung schafft ein Verfahren zum Übertragen von Datenpaketen in einem Kommunikationsnetz, wobei erste Datenpakete mit einer niedrigen Priorität zwischen einem Sender und einem Empfänger des Kommunikationsnetzes übertragen werden und wobei zweite Datenpakete mit einer gegenüber den ersten Datenpaketen höheren Priorität gegenüber den ersten Datenpaketen bevorzugt zwischen dem Sender und dem Empfänger übertragen werden. Wenn in der vorliegenden Beschreibung von der Übertragung erster Datenpakete die Rede ist, so sind hiervon sowohl vollständige Datenpakete als auch Fragmente davon umfasst. Bei dem Verfahren wird bei einem von dem Sender an den Empfänger zu übertragenden zweiten Datenpaket überprüft, ob gegenwärtig ein erstes Datenpaket übertragen wird. Wenn die Überprüfung, ob gegenwärtig ein erstes Datenpaket übertragen wird, positiv ist, wird die Übertragung des ersten Datenpakets abgebrochen oder unterbrochen und das zweite Datenpaket im Anschluss daran übertragen. Nach der Übertragung des zweiten Datenpakets wird die Übertragung des nicht übertragenen ersten Datenpakets wiederholt oder der Rest des unvollständig übertragenen ersten Datenpakets veranlasst.

Das erfindungsgemäße Verfahren zeichnet sich dadurch aus, dass jedes erste Datenpaket parallel zu dessen Übertragung in einem Zwischenspeicher gespeichert wird und erst nach einem vollständigen Empfang des ersten Datenpakets durch den Empfänger aus dem Zwischenspeicher gelöscht wird. Weiter wird bei einem ersten Datenpaket, dessen Übertragung an den Empfänger unvollständig erfolgte, überprüft, ob dessen Header-Daten noch gültig sind, wobei im positiven Fall der Rest des ersten Datenpakets an den Empfänger übertragen wird.

Die Erfindung beschreibt ein Verfahren zum Übertragen von Datenpaketen an einen Netzknoten (Empfänger) eines Kommunikationsnetzes, wobei es unerheblich ist, auf welchem Kommunikationsstandard das Kommunikationsnetz basiert.

Das Vorsehen eines Zwischenspeichers zur Speicherung des ersten Datenpakets parallel zu dessen Übertragung an den Empfänger stellt im Falle eines Abbruchs der Übertragung des ersten Datenpakets sicher, dass die wiederholte Übertragung ohne besondere Maßnahmen aus dem Zwischenspeicher heraus erfolgen kann. Das Vorsehen des Zwischenspeichers stellt sicher, dass im Falle einer wiederholten Übertragung die Übertragung des ersten Datenpakets verzögerungsfrei erfolgen kann. Um eine mehrfache Übertragung des wiederholt gesendeten ersten Datenpakets zu vermeiden, wird das erste Datenpaket aus dem Zwischenspeicher gelöscht, sobald dieses vollständig von dem Empfänger erhalten ist. Das erfindungsgemäße Verfahren weist den Vorteil auf, dass dieses mit lediglich geringen Abwandlungen an der Hardware einer Schalteinrichtung durchgeführt werden kann.

Erfindungsgemäß erfolgt bei noch gültigen Header-Daten keine vollständige erneute Übertragung des ersten Datenpakets, sondern es werden lediglich diejenigen Teile übertragen, welche seit dem Abbruch der Übertragung noch nicht an den Empfänger übertragen wurden. Damit dies möglich ist, ist es jedoch notwendig, dass die Header-Daten noch gültig in der Schalteinrichtung vorliegen.

Gemäß einer zweckmäßigen Ausgestaltung des Verfahrens wird ein erstes Datenpaket, dessen Übertragung wiederholt wird, aus dem Zwischenspeicher ausgelesen und vollständig an den Empfänger übertragen. Hierdurch ist es unerheblich, zu welchem Zeitpunkt ein Abbruch der Übertragung des ersten Datenpakets niedriger Priorität erfolgte. Auf diese Weise kann in jedem Fall sichergestellt werden, dass dem Empfänger ein vollständiges erstes Datenpaket zugeführt wird.

Vor dem Auslesen des ersten Datenpakets aus dem Zwischenspeicher wird zweckmäßigerweise erneut überprüft, ob ein von dem Sender an den Empfänger zu übertragendes zweites Datenpaket vorliegt. Hierdurch soll verhindert werden, dass ein bevorzugtes Übertragen eines in dem Zwischenspeicher gespeicherten ersten Datenpakets erfolgt, welches bei der erneuten Überprüfung, ob ein zweites Datenpaket hoher Priorität zu übertragen ist, wiederum in seiner Übertragung abgebrochen werden müsste. Hierdurch ist es möglich, den Übertragungsprozess insgesamt zu optimieren.

Gemäß einer weiteren Ausgestaltung werden die zweiten Datenpakete hoher Priorität anhand eines die Priorität kennzeichnenden Identifikationsdatums oder anhand ihrer Quell- oder Zieladresse identifiziert. Das die Priorität kennzeichnende Identifikationsdatum kann durch ein vordefiniertes Bit oder Byte in dem Header des Datenpaketes repräsentiert sein. Die Identifikation der zweiten Datenpakete hoher Priorität anhand ihrer Quell- oder Zieladresse weist den Vorteil auf, dass die Datenpakete hinsichtlich ihres Datenaufbaus und ihrer Datenlänge nicht verändert werden müssen. Es ist lediglich eine Anpassung der Auswertung der Quell- oder Zieladresse hinsichtlich der Priorität notwendig.

Gemäß einer weiteren Ausgestaltung werden die Datenpakete unterschiedlicher Priorität in unterschiedliche Ausgangs-Puffer einer Sendevorrichtung eingespeichert, wobei die in den unterschiedlichen Ausgangs-Puffern gespeicherten Datenpakete bezüglich des Zeitpunkts des Aussendens an de Empfänger unterschiedlich behandelt werden. Es ist hierbei ausreichend, wenn zwei unterschiedliche Ausgangs-Puffer vorgesehen werden, wovon einer den ersten Datenpaketen niedriger Priorität und der andere den zweiten Datenpakten hoher Priorität zugeordnet ist. Die Ausgangs-Puffer können z.B. als FIFO (First In First Out)-Buffer realisiert sein. Alternativ können die Ausgangs-Puffer auch in einem gemeinsamen Seicher mit entsprechender Speicheradressierung realisiert sein. Das Einspeichern jeweiliger Datenpakete in den betreffenden Ausgangs-Puffer kann auf einfache Weise durch ein Mittel zur Paketklassifikation realisiert werden.

Es ist zweckmäßig, wenn ein zu übertragendes Datenpaket vollständig empfangen wird, bevor eine Behandlung des Datenpakets durch ein Weiterleiten an einen ermittelten Datenausgang der Sendevorrichtung bzw. der Schaltvorrichtung erfolgt. Dieses Verhalten wird als "Store-and-Forward" bezeichnet. Die Behandlung der Datenpakete umfasst hierbei das Auslesen und Auswerten der in dem Header befindlichen Daten, sowie die Überprüfung der Integrität anhand eines CRC (Cyclic Redundancy Check)-Wertes im Falle eines als Ethernet ausgebildeten Kommunikationsnetzes oder die Auswertung einer Checksumme. Basierend auf den Informationen des Headers wird das Datenpaket über einen Bus oder die Schaltvorrichtung zu dem entsprechender Datenausgang geleitet, wo das Datenpaket in den entsprechenden Ausgangspuffer vor der Übertragung an den Empfänger geleitet wird.

Es ist weiter vorgesehen, dass ein erstes oder ein zweites Datenpaket sofort an den Empfänger übertragen wird, wenn beim Empfang des betreffenden Datenpakets durch die Sendevorrichtung kein Datenpaket an den Empfänger des Datenpakets übertragen wird.

Bei einem von dem Sender an den Empfänger zu übertragenden zweiten Datenpaket wird in einer weiteren Ausgestaltung überprüft, ob gegenwärtig ein zweites Datenpaket übertragen wird, und, wenn die Überprüfung, ob gegenwärtig ein zweites Datenpaket übertragen wird, positiv ist, die Übertragung des zu übertragenden zweiten Datenpakets im Anschluss an das gegenwärtig übertragene zweite Datenpaket erfolgt. Auf diese Weise wird sichergestellt, dass kein zweites Datenpaket hoher Priorität in seiner Übertragung abgebrochen wird, wenn ein weiteres zweites Datenpaket in dem entsprechenden Ausgangs-Puffer vorliegt.

Bei einem von dem Sender an den Empfänger zu übertragenden ersten Datenpaket erfolgt die Übertragung des zu übertragenden ersten Datenpakets im Anschluss an das gegenwärtig übertragene erste oder zweite Datenpaket.

Bei den zweiten Datenpaketen hoher Priorität handelt es sich um solche Datenpakete, welche hinsichtlich Jitter kritisch sind. Dies können insbesondere solche Datenpakete sein, welche beispielsweise zur Zeitsynchronisation verschiedener Netzknoten des Kommunikationsnetzes verwendet werden. Es können jedoch auch andere Datenpakete sein, wie z.B. Sprach- oder Videodaten.

Die Erfindung schafft weiterhin eine Schaltvorrichtung für ein Kommunikationsnetz. Die Schaltvorrichtung umfasst einen oder mehrere Dateneingänge, an welchen ein jeweiliger Sender anschließbar ist. Sie umfasst weiter einen oder mehrere Datenausgänge, an welche ein jeweiliger Empfänger anschließbar ist. Eine Auswerteeinheit ist mit dem oder den Datenausgängen verbunden und über eine jeweilige Sendevorrichtung mit dem oder den Datenausgängen gekoppelt. Die Auswerteeinheit ist dazu ausgebildet, an dem oder den Dateneingängen anliegende Datenpakete zu empfangen und auszuwerten, an welchen der Datenausgänge ein jeweiliges Datenpaket zu lenken ist und die Datenpakte an die entsprechend zugeordnete Sendevorrichtung zu übertragen. Die jeweilige Sendevorrichtung ist dazu ausgebildet, zu überprüfen, ob gegenwärtig ein erstes Datenpaket mit einer niedrigen Priorität an den an die Sendevorrichtung angeschlossenen Empfänger übertragen wird. Wenn die Überprüfung, ob gegenwärtig ein erstes Datenpaket übertragen wird, positiv ist, wird die Übertragung des ersten Datenpakets abgebrochen oder unterbrochen und ein zweites Datenpaket mit einer gegenüber den ersten Datenpaketen höheren Priorität im Anschluss daran übertragen. Nach der Übertragung des zweiten Datenpakets veranlasst die jeweilige Sendevorrichtung die Wiederholung der Übertragung des nicht übertragenen ersten Datenpakets oder die Übertragung des Rests des unvollständig übertragenen ersten Datenpakets. Die Schaltvorrichtung zeichnet sich dadurch aus, dass ein Zwischenspeicher vorgesehen ist, in dem jedes erste Datenpaket parallel zu dessen Übertragung speicherbar ist, welches erst nach einem vollständigen Empfang des ersten Datenpakets durch den Empfänger aus dem Zwischenspeicher gelöscht wird. Ferner ist ein Mittel zur Überprüfung vorgesehen, ob bei einem ersten Datenpaket, dessen Überprüfung an dem Empfänger unvollständig erfolgte, dessen Header-Daten noch gültig sind, wobei im positiven Fall der Rest des ersten Datenpakets an den Empfänger übertragen wird.

Damit sind die gleichen Vorteile verbunden, wie sie vorstehend in Verbindung mit dem erfindungsgemäßen Verfahren erläutert wurden.

Gemäß einer zweckmäßigen Ausgestaltung weist eine jeweilige Sendevorrichtung einen ersten Ausgangs-Puffer für erste Datenpakete niedriger Priorität und einen zweiten Ausgangs-Puffer für zweite Datenpakete hoher Priorität auf, welche ausgangsseitig über eine Auswahlvorrichtung jeweils mit dem betreffenden Datenausgang gekoppelt sind, wobei das Einspeichern von Datenpaketen in Abhängigkeit ihrer Priorität durch ein Mittel zur Paketklassifikation erfolgt.

Es ist weiter zweckmäßig, wenn der erste Ausgangs-Puffer ausgangsseitig mit dem Zwischenspeicher verbunden ist, der durch die Auswahlvorrichtung mit dem betreffenden Datenausgang zum Auslesen verbindbar ist. Mit anderen Worten bedeutet dies, dass der Zwischenspeicher parallel zu dem Ausgang des Ausgangs-Puffer und dem Datenausgang der Schalteinrichtung angeordnet ist, so dass parallel zu einer Übertragung eines ersten Datenpakets an den Empfänger ein Einspeichern dieses Datenpakets in den Zwischenspeicher erfolgt. Im Falle eines Abbruchs der Übertragung des ersten Datenpakets an den Empfänger kann dann eine Wiederholung der Übertragung durch Auslesen des Zwischenspeichers erfolgen. Der Zwischenspeicher kann als separater Speicher in der Schalteinrichtung vorgesehen sein. Der Zwischenspeicher kann jedoch auch durch Zuweisung eines bestimmten Speicherbereichs in dem Speicher der Ausgangs-Puffer vorgesehen sein.

Die Erfindung wird nachfolgend näher anhand eines Ausführungsbeispiels in der Zeichnung erläutert. Es zeigen:
- Fig. 1: eine schematische Darstellung einer erfindungsgemäßen Schaltvorrichtung für ein Kommunikationsnetz,
- Fig. 2A bis 2F: jeweils eine in der erfindungsgemäßen Schaltvorrichtung vorgesehene Sendevorrichtung, welche die Durchführung des erfindungsgemäßen Verfahrens veranschaulicht,
- Fig. 3: ein Flussdiagramm des erfindungsgemäßen Verfahrens, und
- Fig. 4: eine schematische Darstellung eines einfachen Kommunikationsnetzes, in welchem die Erfindung zur Anwendung gelangt.

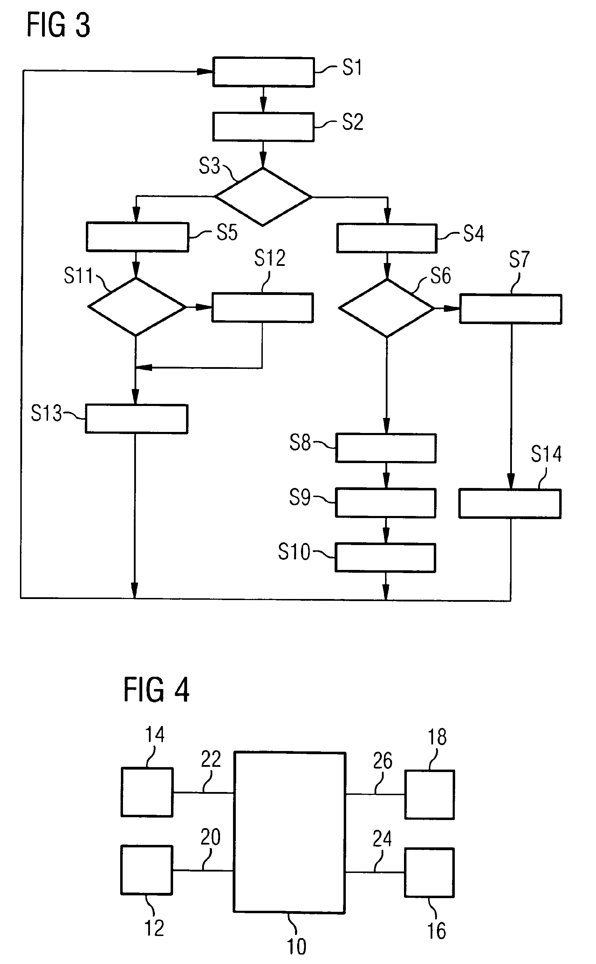

Fig. 4 veranschaulicht auf einfache Weise eine der Erfindung zu Grunde liegende Situation. Dargestellt ist ein Kommunikationsnetz mit fünf Netzknoten. Mit 10 ist eine erfindungsgemäße Schaltvorrichtung gekennzeichnet, welche mit vier Netzknoten 12, 14, 16, 18 kommunikativ verbunden ist. Die auf Datenpaketen basierende Datenübertragung kann auf prinzipiell beliebige Weise unter Verwendung bekannter Kommunikationsprotokolle erfolgen. Die Kommunikation zwischen den einzelnen Netzknoten kann kontaktlos oder kontaktbehaftet erfolgen. Die in dem Kommunikationsnetz ausgebildeten Netzknoten können konstruktiv gleich aufgebaut sein, so dass ein Sender von Datenpaketen auch einen Empfänger von Datenpaketen darstellen kann. Je nach Art und Aufbau des Kommunikationsnetzes kann die Schaltvorrichtung 10 ausschließlich zum Weiterleiten und Vermitteln von Datenpaketen zwischen spezifischen Sendern und Empfängern ausgebildet sein. In anderen Kommunikationsnetzen kann die Schaltvorrichtung 10 auch selbst Sender und/oder Empfänger des Kommunikationsnetzes sein.

Die konstruktive Art und Ausgestaltung des Kommunikationsnetzes spielt für die vorliegende Erfindung eine untergeordnete Rolle. Um das Verständnis der Erfindung zu erleichtern, wird nachfolgend davon ausgegangen, dass die Netzknoten 12 und 14 Sender und die Netzknoten 16 und 18 Empfänger des Kommunikationsnetzes sind, wobei eine Vermittlung der Datenpakete durch die Schalteinrichtung 10 erfolgt. Der Sender 12 ist im Ausführungsbeispiel der Fig. 4 mit einem Dateneingang 20 der Schalteinrichtung 10 verbunden. In entsprechender Weise ist der Sender 40 mit einem Dateneingang 22 verbunden. Die Empfänger 16 und 18 sind über Datenausgänge 24, 26 der Schalteinrichtung 10 mit dieser verbunden.

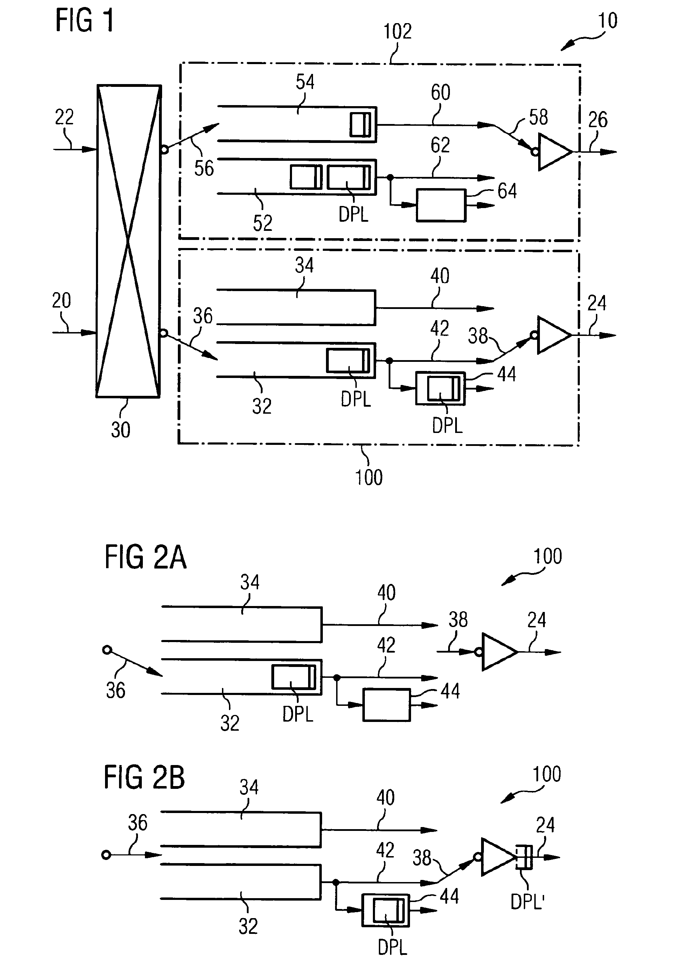

Fig. 1 zeigt in schematischer Weise den Aufbau der erfindungsgemäßen Schaltvorrichtung 10. Die Dateneingänge 20, 22 sind mit einer Auswerteeinheit 30 verbunden. In der Auswerteinheit 30 werden die Header der an den Dateneingängen 20, 22 empfangenen Datenpakete ausgewertet. Die Auswertung erfolgt, sobald ein an einem der Dateneingänge 20, 22 anliegendes Datenpaket vollständig durch die Auswerteeinheit 30 empfangen ist. Dies wird als "Store-and-Forward" bezeichnet. Die Analyse der in dem Header enthaltenen Daten bezieht sich auf die Überprüfung der Integrität des Datenpakets, welche auf Basis eines CRC (Cyclic Redundancy Check)-Wertes im Falle eines Ethernet-Kommunikationsnetzes oder anderer Checksummen erfolgen kann. Basierend auf den in dem Header eines Datenpakets erhaltenen Informationen wird das Datenpaket an einen der Datenausgänge 24 oder 26 weitergeleitet. Wie aus Fig. 1 ohne Weiteres zu ersehen ist, erfolgt die Weiterleitung der Datenpakete an die Datenausgänge 24, 26 nicht unmittelbar. Stattdessen ist ein jeder der Datenausgänge 24, 26 über eine jeweilige Sendevorrichtung 100, 102 mit Ausgängen der Auswerteeinheit 30 gekoppelt. Jede der einem Datenausgang zugeordneten Sendevorrichtungen 100, 102 ist prinzipiell identisch aufgebaut.

Jede der Sendevorrichtungen 100, 102 umfasst zwei Ausgangs-Puffer 32, 34 bzw. 52, 54, welche über ein jeweiliges Mittel zur Paketklassifikation 36 bzw. 56 mit Ausgängen der Auswerteeinheit 30 verbunden sind. Die Ausgangs-Puffer 32 bzw. 52 stellen einen Datenpuffer für erste Datenpakete niedriger Priorität dar. Erste Datenpakete mit niedriger Priorität sind all diejenigen Datenpakete, deren Übertragung zeitunkritisch ist. Die Ausgangs-Puffer 34 bzw. 54 stellen einen Ausgangsspeicher für zweite Datenpakete hoher Priorität dar. Zweite Datenpakete hoher Priorität sind solche Datenpakete, welche beispielsweise hinsichtlich Jitter kritisch sind.

Jeweilige Ausgänge der Ausgangs-Puffer 32, 34 bzw. 52, 54 sind über Datenleitungen 40, 42 bzw. 60, 62 mit einer jeweiligen Auswahlvorrichtung 38 bzw. 58 verbunden, welche eine Datenleitung mit dem betreffenden Datenausgang 24 bzw. 26 verbinden kann. Zusätzlich sind die Ausgangs-Puffer 32 bzw. 52 für die ersten Datenpakete niedriger Priorität ausgangsseitig mit einem Zwischenspeicher 44 bzw. 64 verbunden. Über die jeweilige Auswahlvorrichtung 38 bzw. 58 kann der Zwischenspeicher 44 bzw. 64 alternativ zu den Datenleitungen 40, 42 bzw. 60, 62 ebenfalls mit dem Datenausgang 24 bzw. 26 verbunden werden. Die Auswahlvorrichtung 38 bzw. 58 ist derart ausgebildet, dass lediglich eine einzige der Datenleitungen 40 oder 42 oder der Ausgang des Zwischenspeichers 44 bzw. 60 oder 62 oder der Ausgang des Zwischenspeichers 64 mit dem Datenausgang 24 bzw. 26 verbunden werden kann.

Die in Fig. 1 beschriebene Schaltvorrichtung 10 ermöglicht die bevorzugte Behandlung der zweiten Datenpakete mit hoher Priorität. Dies ermöglicht die Reduktion von Verzögerungen bei der Übertragung der zweiten Datenpakete mit hoher Priorität.

Den zweiten Datenpaketen kann zu deren Identifizierung eine spezielle Priorität (z.B. VLAN 802.1 Q/p für Ethernet, Type of Service (TOS) für Kommunikationen gemäß dem Internetprotokoll IP) zugewiesen werden. Die zweiten Datenpakete hoher Ordnung können auch basierend auf ihrer Quell- oder Zieladresse, welche in den Header-Daten des Datenpakets enthalten ist, identifiziert werden.

Die Erkennung, ob ein an dem Dateneingang 20 bzw. 22 anliegendes Datenpaket von niedriger oder hoher Priorität ist, erfolgt durch die Auswerteeinheit 30. Nachdem durch die Auswerteeinheit 30 festgestellt wurde, an welchem der Datenausgänge 24, 26 das betreffende Datenpaket zu übertragen ist, erfolgt das Einspeichern des Datenpakets in Abhängigkeit der ermittelten Priorität entweder in den Ausgangs-Puffer 32 bzw. 52 im Falle einer ermittelten niedrigen Priorität oder den Ausgangs-Puffer 34 bzw. 54 im Falle einer ermittelten hohen Priorität. Die Ausgangs-Puffer 32, 34 bzw. 52, 54 können als First-in-First-out (FIFO)-Buffer ausgebildet sein. Es ist auch eine Realisierung in Gestalt eines gemeinsamen Speichers und entsprechendem Speichermanagement möglich.

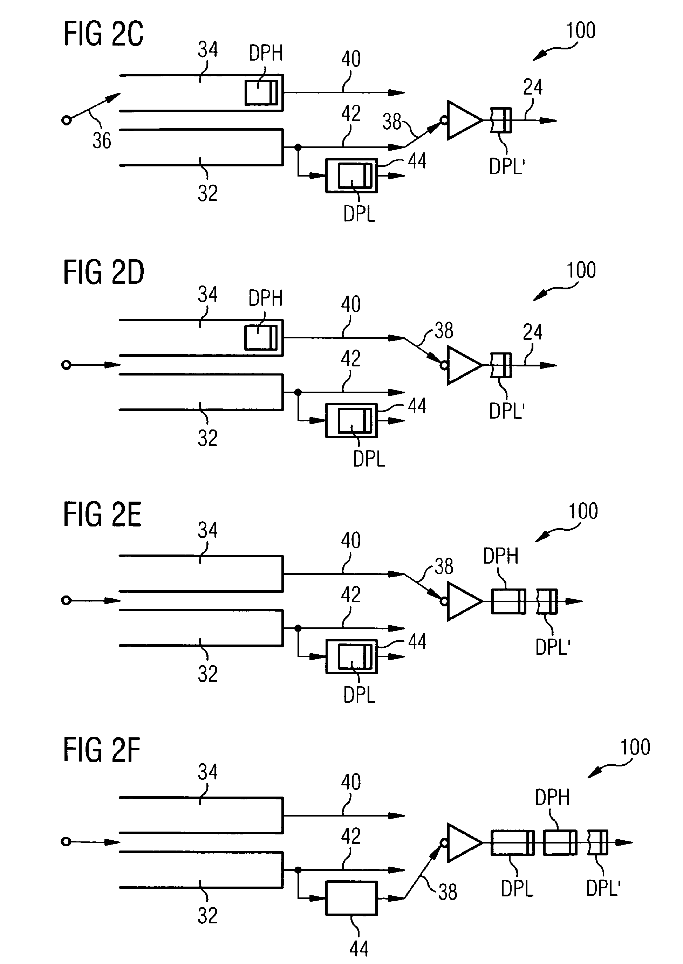

Das Aussenden der in dem oder den Ausgangs-Puffern 32 und/oder 34 bzw. 52 und/oder 54 erfolgt mittels einer in Fig. 1 nicht näher gezeigten Steuerung, z.B. einem Scheduler. Dieses Vorgehen wird nachfolgend anhand der Fig. 2A bis 2F näher beschrieben. Dabei ist zur Vereinfachung lediglich die Sendevorrichtung 100, welche dem Datenausgang 24 zugeordnet ist, dargestellt.

In Fig. 2A wurde nach Auswertung eines Datenpakets und Ermittlung der Priorität ein erstes Datenpaket DPL niedriger Priorität in den Ausgangs-Puffer 32 eingespeichert. Da gegenwärtig kein weiteres Datenpaket in dem Ausgangs-Puffer 34 für Datenpakete hoher Priorität anliegt, wird die Datenleitung 42 durch die Auswahlvorrichtung 38 mit dem Datenausgang 24 verbunden. Damit kann das Datenpaket DPL in dem Ausgangs-Puffer 32 zu dem Empfänger übertragen werden. Parallel zur Übertragung des ersten Datenpakets DPL an den Datenausgang 24 erfolgt ein Einspeichern des ersten Datenpakets DPL in den Zwischenspeicher 44 (vgl. Fig. 2B).

Es wird davon ausgegangen, dass während des Übertragens des ersten Datenpakets PDL ein zweites Datenpaket DPH in den Ausgangs-Puffer 34 eingespeichert wurde. Dies ist exemplarisch in Fig. 2C dargestellt. Daraufhin erfolgt ein Abbruch der Übertragung des bislang lediglich teilweise übertragenen ersten Datenpakets DPL'. Der Abbruch der Übertragung des ersten Datenpakets DPL' ist in Fig. 2D durch die Zick-Zack-Linie symbolisiert. Das bereits an den Empfänger übertragene Fragment des ersten Datenpakets DPL ist in der Figur mit DPL' gekennzeichnet.

Unmittelbar nachdem die Übertragung des ersten Datenpakets DPL abgebrochen wurde, wird durch die Auswahlvorrichtung 38 die Datenleitung 40 mit dem Datenausgang 24 verbunden, wodurch das zweite Datenpaket DPH hoher Priorität aus dem Ausgangs-Puffer 34 an den Empfänger übertragen werden kann. Nachdem das zweite Datenpaket DPH vollständig an den Empfänger übertragen wurde (vgl. Fig. 2E), wird durch die Auswahlvorrichtung 38 der Zwischenspeicher 44 mit dem Datenausgang 24 verbunden, so dass das nicht vollständig an den Empfänger übertragene erste Datenpaket DPL aus dem Zwischenspeicher 44 ausgelesen und an den Empfänger übertragen werden kann. Vor dem Auslesen und Übertragen des ersten Datenpakets DPL aus dem Zwischenspeicher 44 erfolgt bevorzugt eine weitere Überprüfung, ob in dem Ausgangs-Puffer 34 in der Zwischenzeit ein weiteres zweites Datenpaket hoher Priorität enthalten ist.

Der Verfahrensablauf ist anschaulich nochmals in Fig. 3 dargestellt. In Schritt S1 wird ein Datenpaket empfangen. In Schritt S2 wird der Header des Datenpaketes ausgewertet, um festzustellen, an welchen Datenausgang das Datenpaket geleitet werden muss. Ferner umfasst die Auswertung die Ermittlung, ob das Datenpaket eine hohe oder eine niedrigere Priorität aufweist. In Schritt S3 wird überprüft, ob das Datenpaket eine hohe Priorität aufweist. Ist dies der Fall, so wird das Datenpaket in Schritt S4 in einen Ausgangs-Puffer für Datenpakete hoher Priorität geleitet. Ist die Priorität des Datenpakets niedrig, so wird dieses gemäß Schritt S5 in einen Ausgangs-Puffer für Datenpakete niedriger Priorität geleitet. In Schritt S6 wird überprüft, ob ein Datenpaket mit niedriger Priorität gerade gesendet wird. Ist dies der Fall, so erfolgt in Schritt S8 ein Abbruch des Sendevorgangs des Datenpakets mit niedriger Priorität. Im Anschluss erfolgt in Schritt S9 ein sofortiges Aussenden des Datenpakets mit hoher Priorität. In Schritt S10 erfolgt eine wiederholte Übertragung des Datenpakets mit niedriger Priorität. Wurde in Schritt S6 festgestellt, dass kein Datenpaket niedriger Priorität ausgesendet wird, so wird gemäß Schritt S7 gewartet, bis der Übertragungskanal gegebenenfalls frei ist. Anschließend oder sofort erfolgt gemäß Schritt S14 das Aussenden gemäß des Datenpakets hoher Priorität. Schließlich wird in Schritt S1 wiederum überprüft, ob ein neues Datenpaket empfangen wird.

Ist das von der Schalteinrichtung empfangene Datenpaket ein Datenpaket niedriger Priorität (Schritt S5) so wird in Schritt S11 überprüft, ob gerade ein Datenpaket (hoher oder niedriger Priorität) gesendet wird. Ist dies der Fall, so wird gemäß Schritt S12 gewartet, bis der Übertragungskanal frei ist, um dann in Schritt S13 das Datenpaket niedriger Priorität zu senden. Ergab die Überprüfung in Schritt S11, dass der Übertragungskanal frei ist, so erfolgt das Senden des Datenpakets niedriger Prioritäten gemäß Schritt S13 sofort. Anschließend wird wiederum überprüft, ob ein Datenpaket empfangen wurde (Schritt S1).

Es ist zusätzlich vorteilhaft, wenn in einem Ruhezustand oder nachdem ein Datenpaket ausgesendet wurde, überprüft wird, ob ein Datenpaket hoher Priorität in dem entsprechenden Ausgangs-Puffer anliegt, insbesondere bevor Datenpakete niedriger Priorität ausgesendet werden.

In dem bereits erwähnten "Store-and-Forward"-Betrieb werden unvollständige erste Datenpakete niedriger Priorität, deren Übertragung abgebrochen wurde, verworfen. Dies erfolgt deshalb, da die Datenstruktur nicht mehr gültig ist, und aufgrund des nicht mehr vorhandenen Headers in der Schalteinrichtung, eine Übertragung des Rests der Daten nicht mehr möglich ist. Das Verwerfen des Rests des noch nicht übertragenen ersten Datenpakets erfolgt anhand der Überprüfung, dass die Länge des Rests nicht mehr mit der üblichen Länge eines Datenpakets übereinstimmt oder kein Vielfaches eines Ganzen eines Bytes ist oder der ermitteltet CRC-Wert nicht mehr übereinstimmt.

Im Gegensatz dazu wird in dem sog. "Cut-Through"-Betrieb ein unvollständiges Paket bzw. der Rest des unvollständigen Pakets so lange weitergeleitet, so lange der Header gültig ist. Dies ist möglich, da lediglich der Header ausgewertet, jedoch kein CRC-Wert ermittelt wird. Das Verwerfen des Datenpakets erfolgt gegebenenfalls durch den Empfänger.

Mit der Erfindung kann die Qualität der Dienstgüte (Quality of Service, QoS) in Bezug auf eine minimierte variable Verzögerung optimiert werden. Insbesondere kann die gesamte Verzögerung priorisierter Datenpakte durch den Abbruch der Übertragung normaler Datenpakete (d.h. Datenpakete geringerer Priorität) verbessert werden. Dies erleichtert das unverzügliche Weiterleiten von Jitter-kritischen Datenpaketen in Bezug auf Synchronisation, Verzögerungsantworten oder Nachrichten des IEEE 1588 Protokolls. Diese Datenpakete enthalten Zeitinformationen, um Uhren von Empfängern (Slaves) mit Uhren eines Master-Netzknotens zu synchronisieren. Eine variable Verzögerung der Datenpakete zerstört die Zeitinformation und verhindert eine akkurate Zeitinformation.

Das Zwischenspeichern der ersten Datenpakete niederer Priorität bei deren Übertragung an den Empfänger erleichtert die wiederholte Übertragung im Falle einer abgebrochenen Übertragung.

Die vollständige wiederholte Übertragung von Datenpaketen niederer Priorität ermöglicht die Integration in existierende Schalteinrichtungen. Insbesondere ist keine Modifikation eines Übertragungsprotokolls notwendig.

Der Vorteil der Erfindung besteht in einer Minimierung von Punkt-zu-Punkt-Jitter und der Minimierung der totalen Verzögerung von hochprioren Datenpaketen unabhängig von einer Anwendung oder dem verwendeten Übertragungsprotokoll. Solange Datenpakete hoher Priorität in ihrem entsprechenden Ausgangs-Puffer nicht auf eine Übertragung warten müssen aufgrund des Datenübertragungsabbruchs von Datenpaketen niederer Priorität, kann Jitter nahezu zu Null minimiert werden, wobei eine konstante Zeit zum Abbruch der Übertragung des Datenpakets niederer Priorität angenommen wird.

## Patentansprüche

1. Verfahren zum Übertragen von Datenpaketen (DPL, DPH) in einem Kommunikationsnetz, wobei erste Datenpakete (DPL) mit einer niedrigen Priorität zwischen einem Sender (12, 14) und einem Empfänger (16, 18) des Kommunikationsnetzes übertragen werden und wobei zweite Datenpakete (DPH) mit einer gegenüber den ersten Datenpaketen höheren Priorität gegenüber den ersten Datenpaketen (DPL) bevorzugt zwischen dem Sender (12, 14) und dem Empfänger (16, 18) übertragen werden, bei dem
- bei einem von dem Sender (12, 14) an den Empfänger (16, 18) zu übertragenden zweiten Datenpaket (DPH) überprüft wird, ob gegenwärtig ein erstes Datenpaket (DPL) übertragen wird;
- wenn die Überprüfung, ob gegenwärtig ein erstes Datenpaket (DPL) übertragen wird, positiv ist,
- die Übertragung des ersten Datenpakets (DPL) abgebrochen oder unterbrochen wird und das zweite Datenpaket (DPH) im Anschluss daran übertragen wird; und
- nach der Übertragung des zweiten Datenpakets (DPH) die Übertragung des nicht übertragenen ersten Datenpakets (DPL) wiederholt oder der Rest des unvollständig übertragenen ersten Datenpakets (DPL) veranlasst wird;
**dadurch gekennzeichnet, dass**
- jedes erste Datenpaket (DPL) parallel zu dessen Übertragung in einem Zwischenspeicher (44, 64) gespeichert wird und erst nach einem vollständigen Empfang des ersten Datenpakets (DPL) durch den Empfänger (16, 18) aus dem Zwischenspeicher (44, 64) gelöscht wird; und
- bei einem ersten Datenpaket (DPL), dessen Übertragung an den Empfänger (16, 18) unvollständig erfolgte, überprüft wird, ob dessen Header-Daten noch gültig sind, und im positiven Fall der Rest des ersten Datenpaketes (DPL) an den Empfänger (16, 18) übertragen wird.

2. Verfahren nach Anspruch 1, bei dem ein erstes Datenpaket (DPL), dessen Übertragung wiederholt wird, aus dem Zwischenspeicher (44, 64) ausgelesen und vollständig an den Empfänger (16, 18) übertragen wird.

3. Verfahren nach einem der vorherigen Ansprüche, bei dem vor dem Auslesen des ersten Datenpakets (DPL) aus dem Zwischenspeicher (44, 64) erneut überprüft wird, ob ein von dem Sender (12, 14) an den Empfänger (16, 18) zu übertragendes zweites Datenpaket (DPH) vorliegt.

4. Verfahren nach einem der vorherigen Ansprüche, bei dem die zweiten Datenpakete (DPH) hoher Priorität anhand eines die Priorität kennzeichnenden Identifikationsdatums oder anhand ihrer Quell- oder Zieladresse identifiziert werden.

5. Verfahren nach einem der vorherigen Ansprüche, bei dem die Datenpakete (DPL, DPH) unterschiedlicher Priorität in unterschiedliche Ausgangs-Puffer (32, 34; 52, 54) einer Sendevorrichtung (100, 102) eingespeichert werden, wobei die in den unterschiedlichen Ausgangs-Puffer (32, 34; 52, 54) gespeicherten Datenpakete (DPL, DPH) bezüglich des Zeitpunkts des Aussendens an den Empfänger (16, 18) unterschiedlich behandelt werden.

6. Verfahren nach Anspruch 5, bei dem ein zu übertragendes Datenpaket (DPL, DPH) vollständig empfangen wird, bevor eine Behandlung des Datenpakets (DPL, DPH) und ein Weiterleiten an einen ermittelten Datenausgang (24, 26) der Sendevorrichtung (100, 102) der Schaltvorrichtung (10) erfolgt.

7. Verfahren nach Anspruch 5 oder 6, bei dem ein erstes oder ein zweites Datenpaket (DPL, DPH) sofort an den Empfänger (16, 18) übertragen wird, wenn beim Empfang des betreffenden Datenpakets (DPL, DPH) durch die Sendevorrichtung (100, 102) kein Datenpaket an den Empfänger (16, 18) des Datenpakets übertragen wird.

8. Verfahren nach einem der vorherigen Ansprüche, bei dem bei einem von dem Sender (12, 14) an den Empfänger (16, 18) zu übertragenden zweiten Datenpaket (DPH) überprüft wird, ob gegenwärtig ein zweites Datenpaket (DPH) übertragen wird, und, wenn die Überprüfung, ob gegenwärtig ein zweites Datenpaket (DPH) übertragen wird, positiv ist, die Übertragung des zu übertragenden zweiten Datenpakets (DPH) im Anschluss an das gegenwärtig übertragene zweite Datenpaket (DPH) erfolgt.

9. Verfahren nach einem der vorherigen Ansprüche, bei dem bei einem von dem Sender (12, 14) an den Empfänger (16, 18) zu übertragenden ersten Datenpaket (DPL) die Übertragung des zu übertragenden ersten Datenpakets (DPL) im Anschluss an das gegenwärtig übertragene erste oder zweite Datenpaket (DPL, DPH) erfolgt.

10. Verfahren nach einem der vorherigen Ansprüche, bei dem die zweiten Datenpakete (DPH) hoher Priorität Datenpakete sind, welche hinsichtlich Jitter kritisch sind.

11. Schaltvorrichtung (10) für ein Kommunikationsnetz, umfassend:
- einen oder mehrere Dateneingänge (20, 22), an welche ein jeweiliger Sender (12, 14) anschließbar ist,
- eine oder mehrere Datenausgänge (24, 26), an welche ein jeweiliger Empfänger (16, 18) anschließbar ist,
- eine Auswerteeinheit (30), welche mit dem oder den Dateneingängen (20, 22) verbunden und über eine jeweilige Sendevorrichtung (100, 102) mit dem oder den Datenausgängen (24, 26) gekoppelt ist,
- wobei die Auswerteeinheit (30) dazu ausgebildet ist, an dem oder den Dateneingängen (20, 22) anliegende Datenpakete (DPL, DPH) zu empfangen und auszuwerten, an welchen der Datenausgänge (24, 26) ein jeweiliges Datenpaket (DPL, DPH) zu lenken ist und die Datenpakete (DPL, DPH) an die entsprechend zugeordnete Sendevorrichtung (100, 102) überträgt,
- wobei die jeweilige Sendevorrichtung (100, 102) dazu ausgebildet ist,
- zu überprüfen, ob gegenwärtig ein erstes Datenpaket (DPL) mit einer niedrigen Priorität an den an die Sendevorrichtung (100, 102) angeschlossenen Empfänger (16, 18) übertragen wird; und
- wenn die Überprüfung, ob gegenwärtig ein erstes Datenpaket (DPL) übertragen wird, positiv ist,
- die Übertragung des ersten Datenpakets (DPL) abzubrechen oder zu unterbrechen und ein zweites Datenpaket (DPH) mit einer gegenüber den ersten Datenpaketen höheren Priorität im Anschluss daran zu übertragen; und
- nach der Übertragung des zweiten Datenpakets (DPH) die Übertragung des nicht übertragenen ersten Datenpakets (DPL) zu wiederholen oder den Rest des unvollständig übertragenen ersten Datenpakets (DPL) zu veranlassen,
**dadurch gekennzeichnet, dass**
die Schaltvorrichtung weiter umfasst:
- einen Zwischenspeicher (44, 64), in dem jedes erste Datenpaket (DPL) parallel zu dessen Übertragung speicherbar ist, welches erst nach einem vollständigen Empfang des ersten Datenpakets (DPL) durch den Empfänger (16, 18) aus dem Zwischenspeicher (44, 64) gelöscht wird; und
- ein Mittel zur Überprüfung, ob bei einem ersten Datenpaket, dessen übertragung den Empfänger (16, 18) unvollständig erfolgt, dessen Header-Daten noch gültig sind, wobei im positiven Fall der Rest des ersten Datenpakets an den Empfänger (16, 18) übertragen wird.

12. Schaltvorrichtung nach Anspruch 11, bei der eine jeweilige Sendevorrichtung (100, 102) einen ersten Ausgangs-Puffer (32, 52) für erste Datenpakete (DPL) niedriger Priorität und einen zweiten Ausgangs-Puffer (34, 54) für zweite Datenpakete (DPH) hoher Priorität aufweist, welche ausgangsseitig über eine Auswahlvorrichtung (38, 58) jeweils mit dem betreffenden Datenausgang (16, 18) gekoppelt sind, wobei das Einspeichern von Datenpaketen in Abhängigkeit ihrer Priorität durch ein Mittel zur Paketklassifikation (36, 56) erfolgt.

13. Schaltvorrichtung nach Anspruch 12, bei der der erste Ausgangs-Puffer (32, 52) ausgangsseitig mit dem Zwischenspeicher (44, 64) verbunden ist, der durch die Auswahlvorrichtung (38, 58) mit dem betreffenden Datenausgang (16, 18) zum Auslesen verbindbar ist.

## Claims

1. Method for transferring data packets (DPL, DPH) in a communication network, wherein first data packets (DPL) having a low priority are transferred between a transmitter (12, 14) and a receiver (16, 18) of the communication network and wherein second data packets (DPH) having a high priority compared to the first data packets (DPL) are preferably transferred between the transmitter (12, 14) and the receiver (16, 18), wherein
- in a second data packet (DPH) to be transferred from the transmitter (12, 14) to the receiver (16, 18) a check is performed to see whether presently a first data packet (DPL) is being transferred,
- if the check as to whether a first data packet (DPL) is being transferred presently is positive,
- the transfer of the first data packet (DPL) is interrupted or stopped and the second data packet (DPH) is then transferred,
- after the transfer of the second data packet (DPH), the transfer of the non-transferred first data packet (DPL) is repeated or the rest of the incompletely transferred first data packet (DPL) is transferred,
**characterized in that**
- each first data packet (DPL) is stored in an intermediate memory (44, 64) in parallel with a transmission and is only deleted from the intermediate memory (44, 64) after complete transfer of the first data packet (DPL) to the receiver (16, 18); and
- in a first data packet (DPL), whose transfer to the receiver (16, 18) is incomplete, a check is performed as to whether its header data is still valid, and if so the rest of the first data packet (DPL) is transferred to the receiver (16, 18).

2. Method according to claim 1, wherein a first data packet (DPL), whose transfer is repeated, is read out from the intermediate memory (44, 64) and is completely transferred to the receiver (16, 18).

3. Method according to one of the preceding claims, wherein before reading out the first data packet (DPL) from the intermediate memory (44, 64), a check is again performed as to whether a second data packet (DPH) to be transferred from the transmitter (12, 14) to the receiver (16, 18) exists.

4. Method according to one of the preceding claims, wherein the second data packets (DPH) having a high priority are identified using an identification date identifying the priority, or using their source or destination address.

5. Method according to one of the preceding claims, wherein the data packets (DPL, DPH) having different priorities are stored in different output buffers (32, 34; 52, 54) of a transmitting device (100, 102), the data packets (DPL, DPH) stored in the different output buffers (32, 34; 52, 54) being handled differently with respect to the time of sending to the receiver (16, 18).

6. Method according to claim 5, wherein a data packet (DPL, DPH) to be transferred is completely received before the data packet (DPL, DPH) is handled and forwarded to a determined data output (24, 26) of the transmitting device (100, 102) of the switching device (10).

7. Method according to claim 5 or 6, wherein a first or a second data packet (DPL, DPH) is immediately transferred to the receiver (16, 18) if no data packet is being transferred by the transmitting device (100, 102) to the receiver (16, 18) of the data packet when the relevant data packet (DPL, DPH) is received.

8. Method according to one of the preceding claims, wherein in a second data packet (DPH) to be transferred from the transmitter (12, 14) to the receiver (16, 18) a check is performed as to whether presently a second data packet (DPH) is being transferred, and, if the check as to whether a second data packet (DPH) is being transferred presently is positive, the second data packet (DPH) to be transferred is transferred following the presently transferred second data packet (DPH).

9. Method according to one of the preceding claims, wherein in a first data packet (DPL) to be transferred from the transmitter (12, 14) to the receiver (16, 18) the first data packet (DPL) to be transferred is transferred following the presently transferred first or second data packet (DPL, DPH).

10. Method according to one of the preceding claims, wherein the second data packets (DPH) having a high priority are data packets which are critical with respect to jitter.

11. Switching device (10) for a communication network, comprising:
- one or more data input(s) (20, 22) to which a respective transmitter (12, 14) may be connected,
- one or more data output(s) (24, 26) to which a respective receiver (16, 18) may be connected,
- an evaluation unit (30) which is connected to the data input(s) (20, 22) and is coupled by a respective transmitting device (100, 102) to the data output(s) (24, 26),
- wherein the evaluation unit (30) is adapted to receive and evaluate data packets (DPL, DPH) present at the data input(s) (20, 22), to which of the data outputs (24, 26) a respective data packet (DPL, DPH) is to be directed, and transfers the data packets (DPL, DPH) to the accordingly assigned transmitting device (100, 102),
- wherein the respective transmitting device (100, 102) is adapted to
- check whether presently a first data packet (DPL) having a low priority is being transferred to the receiver (16, 18) connected to the transmitting device (100, 102), and
- if the check as to whether a first data packet (DPL) is being transferred presently is positive,
- to interrupt or stop the transfer of the first data packet (DPL), and then to transfer a second data packet (DPH) having a higher priority compared to the first data packets; and
- after the transfer of the second data packet (DPH), to repeat the transfer of the non-transferred first data packet (DPL) or to transfer the rest of the incompletely transferred first data packet (DPL),
**characterized in that**
the switching device also comprises:
- an intermediate memory (44, 64) in which each first data packet (DPL) may be stored in parallel with a transmission and is only deleted from the intermediate memory (44, 64) after complete transfer of the first data packet (DPL) to the receiver (16, 18), and
- a means of checking, in a first data packet (DPL), whose transfer to the receiver (16, 18) is incomplete, as to whether its header data is still valid, and if so the rest of the first data packet (DPL) is transferred to the receiver (16, 18).

12. Switching device according to claim 11, wherein a respective transmitting device (100, 102) has a first output buffer (32, 52) for first data packets (DPL) having a low priority and a second output buffer (34, 54) for second data packets (DPH) having a high priority, which buffers are coupled at the output side via a selecting device (38, 58) to the relevant data output (16, 18) respectively, data packets being stored as a function of their priority by a means for packet classification (36, 56).

13. Switching device according to claim 12, wherein the first output buffer (32, 52) is connected at the output side to the intermediate memory (44, 64) which may be connected by the selecting device (38, 58) to the relevant data output (16, 18) for reading out.

## Revendications

1. Procédé de transmission de paquets de données (DPL, DPH) dans un réseau de communication, des premiers paquets de données (DPL) étant transmis avec une priorité basse entre un émetteur (12, 14) et un récepteur (16, 18) du réseau de communication et des deuxièmes paquets de données (DPH) étant transmis avec une priorité plus élevée en comparaison avec les premiers paquets de données (DPL) de préférence entre l'émetteur (12, 14) et le récepteur (16, 18), dans lequel :
- il est vérifié, pour un deuxième paquet de données (DPH) à transmettre de l'émetteur (12, 14) au récepteur (16, 18), si un premier paquet de données (DPL) est actuellement transmis ;
- si la vérification visant à établir s'il y a actuellement transmission d'un premier paquet de données (DPL) est positive :
■ la transmission du premier paquet de données (DPL) est coupée ou interrompue et le deuxième paquet de données (DPH) est ensuite transmis et,
■ après la transmission du deuxième paquet de données (DPH), la transmission du premier paquet de données (DPL) non transmis est répétée ou la transmission du reste du premier paquet de données (DPL) incomplètement transmis est provoqué,
**caractérisé en ce que** :
- chaque premier paquet de données (DPL) est stocké, parallèlement à sa transmission, dans une mémoire intermédiaire (44, 64) et n'est effacé de la mémoire intermédiaire (44, 64) qu'après réception complète du premier paquet de données (DPL) par le récepteur (16, 18) et
- il est vérifié, pour un premier paquet de données (DPL) dont la transmission au récepteur (16, 18) s'est effectuée incomplètement, si les données d'en-tête de ce paquet sont encore valides et, si cette vérification est positive, le reste du premier paquet de données (DPL) est transmis au récepteur (16, 18).

2. Procédé selon la revendication 1, dans lequel un premier paquet de données (DPL) dont la transmission est répétée est lu hors de la mémoire intermédiaire (44, 64) et est entièrement transmis au récepteur (16, 18).

3. Procédé selon l'une des revendications précédentes, dans lequel il est de nouveau vérifié, avant la lecture du premier paquet de données (DPL) hors de la mémoire intermédiaire (44, 64), s'il y a un deuxième paquet de données (DPH) à transmettre de l'émetteur (12, 14) au récepteur (16, 18).

4. Procédé selon l'une des revendications précédentes, dans lequel les deuxièmes paquets de données (DPH) de priorité haute sont identifiés à l'aide d'une donnée d'identification indiquant la priorité ou à l'aide de son adresse source ou de destination.

5. Procédé selon l'une des revendications précédentes, dans lequel les paquets de données (DPL, DPH) de priorité différente sont stockés dans différentes mémoires tampons de sortie (32, 34 ; 52, 54) d'un dispositif d'émission (100, 102), les paquets de données (DPL, DPH) stockés dans les différentes mémoires tampons de sortie (32, 34 ; 52, 54) étant traités différemment en ce qui concerne l'instant de l'envoi au récepteur (16, 18).

6. Procédé selon la revendication 5, dans lequel un paquet de données à transmettre (DPL, DPH) est entièrement reçu avant qu'il n'y ait traitement du paquet de données (DPL, DPH) et retransmission vers une sortie de données qui a été déterminée (24, 26) du dispositif d'émission (100, 102) du dispositif de commutation (10).

7. Procédé selon la revendication 5 ou 6, dans lequel un premier ou un deuxième paquet de données (DPL, DPH) est transmis immédiatement au récepteur (16, 18) si, à la réception du paquet de données concerné (DPL, DPH), aucun paquet de données n'est transmis au récepteur (16, 18) du paquet de données par le dispositif d'émission (100, 102).

8. Procédé selon l'une des revendications précédentes, dans lequel il est vérifié, pour un deuxième paquet de données (DPH) à transmettre de l'émetteur (12, 14) au récepteur (16, 18), s'il y a actuellement transmission d'un deuxième paquet de données (DPH) et, si la vérification visant à établir s'il y a actuellement transmission d'un deuxième parquet de données (DPH) est positive, la transmission du deuxième paquet de données (DPH) à transmettre s'effectue à la suite du deuxième paquet de données (DPH) actuellement transmis.

9. Procédé selon l'une des revendications précédentes, dans lequel la transmission du premier paquet de données (DPL) à transmettre s'effectue, pour un premier paquet de données (DPL) à transmettre de l'émetteur (12, 14) au récepteur (16, 18), à la suite du premier ou du deuxième paquet de données (DPL, DPH) actuellement transmis.

10. Procédé selon l'une des revendications précédentes, dans lequel les deuxièmes paquets de données (DPH) de priorité haute sont des paquets de données qui sont critiques en termes de gigue.

11. Dispositif de commutation (10) pour un réseau de commutation, comprenant :
- une ou plusieurs entrées de données (20, 22) auxquelles peut être connecté un émetteur respectif (12, 14) ;
- une ou plusieurs sorties de données (24, 26) auxquelles peut être raccordé un récepteur respectif (16, 18) ;
- une unité d'évaluation (30) qui est reliée à ou aux entrées de données (20, 22) et est couplée à la ou aux sorties de données (24, 26) par l'intermédiaire d'un dispositif d'émission respectif (100, 102) ;
- l'unité d'évaluation (30) étant réalisée pour recevoir des paquets de données (DPL, DPH) qui se trouvent au niveau de ou des entrées de données (20, 22) et pour évaluer vers laquelle des sorties de données (24, 26) un paquet de données respectif (DPL, DPH) doit être dirigé, et transmettant les paquets de données (DPL, DPH) au dispositif d'émission (100, 102) associé de manière correspondante
- le dispositif d'émission respectif (100, 102) étant réalisé :
- pour vérifier si un premier paquet de données (DPL) est actuellement transmis avec une priorité basse au récepteur (16, 18) connecté au dispositif d'émission (100, 102) et,
- si la vérification visant à établir s'il y a actuellement transmission d'un premier paquet de données (DPL) est positive :
■ pour couper ou interrompre la transmission du premier paquet de données (DPL) et transmettre ensuite un deuxième paquet de données (DPH) avec une priorité plus élevée en comparaison avec les premiers paquets de données et
■ pour, après la transmission du deuxième paquet de données (DPH), répéter la transmission du premier paquet de données (DPL) non transmis ou provoquer la transmission du reste du premier paquet de données (DPL) incomplètement transmis,
**caractérisé en ce que** le dispositif de commutation comprend en outré :
- une mémoire intermédiaire (44, 64) dans laquelle chaque premier paquet de données (DPL) peut être stocké parallèlement à sa transmission, lequel n'est effacé de la mémoire intermédiaire (44, 64) qu'après réception complète du premier paquet de données (DPL) par le récepteur (16, 18) et
- un moyen pour vérifier si, pour un premier paquet de données dont la transmission au récepteur (16, 18) s'effectue incomplètement, les données d'en-tête de ce paquet sont encore valides, le reste du premier paquet de données (DPL) étant transmis au récepteur (16, 18) si cette vérification est positive.

12. Dispositif de commutation selon la revendication 11, dans lequel un dispositif d'émission respectif (100, 102) comporte une première mémoire tampon de sortie (32, 52) pour de premiers paquets de données (DPL) de priorité basse et une deuxième mémoire tampon de sortie (34, 54) pour de deuxièmes paquets de données (DPH) de priorité haute, lesquelles sont couplées, côté sortie, respectivement à la sortie de données concernée (16, 18) par l'intermédiaire d'un dispositif de sélection (38, 58), le stockage de paquets de données s'effectuant en fonction de leur priorité par un moyen de classification de paquets (36, 56).

13. Dispositif de commutation selon la revendication 12, dans lequel la première mémoire tampon de sortie (32, 52) est reliée, côté sortie, à la mémoire intermédiaire (44, 64) qui peut être reliée à la sortie de données concernée (16, 18) par le dispositif de sélection (38, 58) pour lecture.
